**Europäisches Patentamt**

**European Patent Office**

**Office européen des brevets**

(19)

(11) Veröffentlichungsnummer: **0 359 709**
A2

# (12) EUROPÄISCHE PATENTANMELDUNG

(21) Anmeldenummer: **89810665.3**

(22) Anmeldetag: **05.09.89**

(51) Int. Cl.⁵: **C 08 L 63/00**
C 08 K 3/22, C 08 K 3/34

(30) Priorität: **14.09.88 US 244196**

(43) Veröffentlichungstag der Anmeldung:
**21.03.90 Patentblatt 90/12**

(84) Benannte Vertragsstaaten:
**BE CH DE ES FR GB IT LI NL SE**

(71) Anmelder: **CIBA-GEIGY AG**
**Klybeckstrasse 141**
**CH-4002 Basel (CH)**

(72) Erfinder: **Eadara, Rajan**
**916 J. Cherry Lane**
**East Lansing Michigan 48823 (US)**

**Armbruster, Robert F.**
**6 Louis Place**
**Brewster, N.Y. 10509 (US)**

(54) **Durch Induktionswärme härtbare Epoxidharzsysteme.**

(57) Zusammensetzung enthaltend
a) 4-50 Gew.-% eines flüssigen Epoxidharzes mit durchschnittlich mehr als einer Epoxygruppe pro Molekül;
b) 40-80 Gew.-% an Kieselerdepartikeln; und
c) 10-50 Gew.-% einer Komponente, die auf Induktionsstrom anspricht und aus der Gruppe bestehend aus Eisenoxiden und Stahlpulver und deren Gemische ausgewählt ist
sind als witterungsunabhängige Reparaturmörtel für schadhafte Oberflächen gut geeignet.

EP 0 359 709 A2

**Beschreibung**

## Durch Induktionswärme härtbare Epoxidharzsysteme

Die vorliegende Erfindung betrifft gefüllte Epoxidharzzusammensetzungen, die durch Induktionswärme härtbar sind, die so erhältlichen gehärteten Produkte, sowie die Verwendung dieser Zusammensetzungen zur Reparatur von beschädigten Oberflächen.

Die verschiedenen Umweltbedingungen, wie sie bei der In situ-Reparatur von Beton- und ähnlichen Oberflächen auftreten, stellen hohe Anforderungen an den Reparaturmörtel. Unter die dort anzutreffenden widrigen Bedingungen bei der Reparatur von z.B. Strassen, Startbahnen, Brücken und anderem mehr, fallen die verschiedensten Winkel und Positionen der Oberflächen, wie z.B. vertikale, horizontale oder Ueber-Kopf-Oberflächen, aber auch widrige Wetterverhältnisse wie beispielsweise Regen, Schnee, Eis oder Temperaturextreme.

Daher müssen solche funktionellen Reparaturmörtel auf allen Oberflächenformen unter allen Wetterbedingungen anwendbar sein, wobei sie vollständig härtbar sein müssen; ferner müssen sie die jeweils notwendigen physikalischen Eigenschaften innert nützlicher Frist aufweisen und diese unter den verschiedensten Umweltbedingungen aufrechterhalten.

Die bis jetzt verwendeten Reparaturmörtel enthalten in der Regel Zwei- oder Dreikomponenten-Epoxidharzsysteme.

So enthalten solche Zweikomponenten-Systeme eine Komponente A (eine Harzkomponente mit Füllstoff) und eine Komponente B (Härter), während Drei-Komponenten-Systeme Komponente A (Harz), Komponente B (Härter) und Komponente C (Füllstoff) enthalten, wobei diese notwendigerweise jeweils unmittelbar vor Gebrauch unter Feldbedingungen gemischt werden. Diese Anforderungen sind mühsam, da jeweils zwei oder drei chemische Systeme auf die Baustelle gebracht werden müssen und ebenfalls die geeignete Mischapparatur auf der Baustelle sein muss. Der Hauptnachteil der gegenwärtig eingesetzten Systeme jedoch ist deren langsame Härtungseigenschaften und das damit verbundene verzögerte Erreichen der notwendigen physikalischen Eigenschaften, meist erst nach einer Zeit von 24 Stunden. Widrige Wetterbedingungen bei der Anwendung und der Härtung können die Härtung verzögern und/oder die Unversehrtheit des Reparaturmörtels verunmöglichen.

Es besteht daher ein Bedürfnis nach Epoxidharzsystemen, die auf einfache Weise als Reparaturmörtel eingesetzt werden können, und die die vorstehend erwähnten Nachteile der bisher eingesetzten Systeme vor allem in Bezug auf Geschwindigkeit und Flexibilität der Härtung nicht aufweisen.

Es wurde nun überraschend gefunden, dass durch Einarbeiten von Eisenoxid- oder Stahlpulver in mit Kieselerde gefüllte, Härter enthaltende Epoxidharz-Systeme verbesserte Eigenschaften erhalten werden.

So können solche verbesserten Systeme durch Verwendung von Induktionswärmeenergiequellen rasch gehärtet werden.

Die vorliegende Erfindung betrifft eine Zusammensetzung enthaltend

a) 4-50 Gew.-% eines flüssigen Epoxidharzes mit durchschnittlich mehr als einer Epoxygruppe pro Molekül;

b) 40-80 Gew.-% an Kieselerdepartikeln; und

c) 10-50 Gew.-% einer Komponente, die auf Induktionsstrom anspricht und aus der Gruppe bestehend aus Eisenoxiden und Stahlpulver und deren Gemische ausgewählt ist.

Eine Härtung solcher Zusammensetzungen kann in der Regel innerhalb von zwei Stunden erfolgen und so der reparierten Struktur die zur raschen Wiederbenutzung notwendigen physikalischen Eigenschaften geben. Diese Systeme sind besonders von Nutzen unter widrigen und kalten Witterungsbedingungen, wobei die Härtungsgeschwindigkeit und die Unversehrtheit des gehärteten Systems beibehalten werden.

Die erfindungsgemässen Zusammensetzungen werden mit Vorteil als Einkomponentensysteme formuliert, wobei das Mischprozedere auf der Baustelle entfällt; aber können, wenn dies gewünscht ist, als verschiedene Komponenten formuliert werden ohne den Vorteil der grösseren Härtungsgeschwindigkeit und des besseren Härtungsgrads zu verlieren.

Die Epoxidharze, die in den erfindungsgemässen Zusammensetzungen eingesetzt werden, sind Polyepoxide mit im Durchschnitt mehr als einer Epoxygruppe pro Molekül.

Bevorzugt sind diese bei Raumtemperatur flüssig. Geeignet sind beispielsweise gesättigte, ungesättigte, aliphatische, alicyclische, aromatische oder heterocyclische Epoxide. Diese können gegebenenfalls einen nicht störenden Substituenten wie z.B. ein Halogenatom, eine Hydroxygruppe, eine Ethergruppe und/oder eine Estergruppe aufweisen.

Beispiele für solche Polyepoxide umfassen Epoxy-Novolake, Polyglycidylether von zweiwertigen Phenolen wie z.B. 2,2-Bis-(4-hydroxyphenyl)-propan (Bisphenol-A), 1,1-Bis-(4-hydroxyphenyl)-ethan, Bis-(4-hydroxyphenyl)-methan, Bis-(4-hydroxyphenyl)-sulfon, Resorcin und Hydrochinon; Polyglycidylether von dreiwertigen Alkoholen wie z.B. Glycerin, Polyglycidylester wie beispielsweise Diglycidylphthalat und Diglycidylisophthalat; cycloaliphatische Epoxidharze, epoxidierte Ester von polyethylenisch ungesättigten Fettsäuren wie beispielsweise epoxidiertes Leinsamenöl, epoxidierte Ester von ungesättigten Alkoholen und ungesättigten Carbonsäuren wie z.B. 3,4-Epoxycyclohexylmethyl-3,4-epoxycyclohexylcarboxylat, sowie epoxidierte polyethylenisch ungesättigte Kohlenwasserstoffe wie beispielsweise epoxidiertes 2,2-Bis-(2-cyclohexenyl)-propan, epoxidiertes Vinylcyclohexan oder epoxidiertes Cyclopentadiendimer.

Von diesen Polyepoxiden sind die Polyglycidylether von mehrwertigen Phenolen und insbesondere die Diglycidylether von zweiwertigen Phenolen bevorzugt.

Speziell bevorzugt ist der Diglycidylether von 2,2-Bis-(4-hydroxyphenyl)-propan.

Die Epoxidharz-Komponente weist bevorzugt ein Epoxidequivalentgewicht von 150-500 g/Equivalent auf.

Wie erwähnt, sind flüssige Harze bevorzugt. Geeignete Harze umfassen auch Epoxidharze, deren Viskosität durch Zusatz von reaktiven Verdünnern wie beispielsweise Glycidylether, Glykolether oder aromatische Kohlenwasserstoffe herabgesetzt wird.

Kieselerdepartikel sind als Füllstoffe für Epoxidharze bekannt. Für den erfindungsgemässen Einsatz sind Kieselerdepartikel mit einer Partikelgrösse von 0,03 bis 0,42 mm, wobei sozusagen alle (mindestens 90 %) Partikel in diesen Bereich fallen, bevorzugt geeignet.

Zu den Komponenten, die auf einen Induktionsstrom ansprechen, gehören $\gamma$-Eisenoxid (Fe$_2$O$_3$), magnetisches Eisenoxid (Fe$_3$O$_4$), Stahlpulver oder deren Gemische.

Stahlpulver ist bevorzugt, insbesondere in einer der Partikelgrössenverteilung der Kieselerde entsprechenden Partikelgrösse.

Die Härter, die sich zum Einsatz in den erfindungsgemässen gefüllten Epoxidharzsystemen eignen, werden nach dem Kriterium, ob das vollständig formulierte Harzsystem ein Ein- oder Mehr-Komponentensystem darstellt, eingesetzt. So kommen Härter oder katalytische Härter, die latente (d.h. verzögerte) Härtungseigenschaften aufweisen, bevorzugt in Einkomponentensystemen zum Einsatz, während konventionelle Polyamine für die Ver wendung in Zwei- oder Drei-Komponentensystemen eingesetzt werden.

Latente Härter umfassen beispielsweise modifizierte Polyamide, wie z.B. Diamin/Bisphenol A/Bisphenol A-diglycidylether-Umsetzungsprodukte; Imidazole wie z.B. 2-Methylimidazol, 2-Phenylimidazol, 1-Benzyl-2-methylimidazol oder 1-Cyanoethyl-2-methylimidazol; Amidine wie beispielsweise Dicyandiamid oder 1-Cyan-3-(niederalkyl)-guanidine (z.B. 3-Methyl-, 3,3-Dimethyl- oder 3,3-Diethyl-Derivate); Bortrifluorid-Amin-Komplexe; Semicarbazide; oder Polyhydrazide wie z.B. Isophthalyldihydrazid, Sebacyldihydrazid oder Adipyldihydrazid.

Als Amine, die sich zum Einsatz in Mehrkomponenten-Systemen eignen, sind aliphatische oder cycloaliphatische primäre und sekundäre Amine einschliesslich deren Gemische zu nennen. Typische Amine sind z.B. Ethylendiamin, Hexamethylendiamin, Trimethylhexamethylendiamin, Methylpentamethylendiamin, Diethylentriamin, Triethylentetramin, Tetraethylenpentamin, N,N-Dimethylpropylen-1,3-diamin, N,N-Diethylpropylen-1,3-diamin, Bis-(4-amino-3-methyl-cyclohexyl)-methan, Bis-(p-aminocyclohexyl)-methan, 2,2-Bis-(4-aminocyclohexyl)-propan, 3,5,5-Trimethyl-s-(aminomethyl)-cyclohexylamin, 1,2-Diaminocyclohexan, 1,4-Diaminocyclohexan, 1,3-Bis-(aminomethyl)-cyclohexan, 1,4-Bis-(aminomethyl)-cyclohexan, N-aminoethylpiperazine oder Isophorondiamin.

Bevorzugt sind 2,4,4-Trimethylhexamethylendiamin, 2-Methylpentamethylendiamin, Diethylentriamin, Triethylentetramin, Tetraethylenpentamin, 1,2-Diaminocyclohexan, Bis-(p-aminocyclohexyl)-methan, Isophorondiamin, 1,4-Bis-(aminomethyl)-cyclohexan, N-Aminoethyl-piperazin und 1,3-Bis-(aminomethyl)-cyclohexan.

Die einzelnen Komponenten (a), (b) und (c) werden bevorzugt in den folgenden Konzentrationen bezogen auf das Gesamtgewicht der Zusammensetzung ohne Härter eingesetzt:

5-20 Gew.-% des Epoxidharzes (a), 50-70 Gew.-% an Kieselerdepartikeln (b) und 25-45 Gew.-% der Eisen- oder Stahlkomponente (c).

Der Härter wird in einem Verhältnis von 0,5-1,5:1 des stöchiometrischen Verhältnisses bezogen auf das ungefüllte Epoxidharz, bevorzugt jedoch im Verhältnis 1:1, eingesetzt.

Die Komponenten werden im allgemeinen bei Raumtemperatur gemischt. Die Härterkomponente wird für Einkomponentensysteme sofort dazugegeben, während sie für Mehrkomponentensysteme am Einsatzort zugemischt wird. Die Mischungen weisen eine kittartige Konsistenz auf.

Die so erhaltenen Zusammensetzungen werden unter Anwendung einer Induktionswärmeenergiequelle gehärtet. So kann beispielsweise ein Hochfrequenzgenerator eingesetzt werden, um einen Induktionsstrom durch eine auf der Oberfläche der Epoxidharzmörtelzusammensetzung angebrachten Kupferwicklung zu erzeugen. Die Anwendungsdauer der Induktionswärme beträgt im allgemeinen 1 bis 30 Minuten bei einer bestimmten Energie und Frequenz, was eine vollständige Härtung in weniger als drei Stunden und im allgemeinen in weniger als zwei Stunden bewirkt. Diese Härtungszeiten sind bedeutend kürzer als diejenigen für konventionelle Epoxidharzreparaturmörtel mit Härtung bei Umgebungstemperatur.

Bei der Härtung entsteht ein Produkt mit hohem Vernetzungsgrad. Daher bedeutet der Ausdruck "Härtung" in dieser Beschreibung die Umwandlung, der vorstehend definierten Epoxidharzzusammensetzungen in unlösliche und unschmelzbare vernetzte Produkte. Diese sind auch Gegenstand der vorliegenden Erfindung.

Den erfindungsgemäss hergestellten Epoxidharzen können, zu irgendeinem Zeitpunkt vor der Härtung übliche Zusätze zugemischt werden, wie z.B. Streckmittel, weitere Füllstoffe, Verstärkungsmaterialien, Pigmente, Farbstoffe, organische Lösungsmittel, Weichmacher, Klebrigmacher, Kautschuke und Beschleuniger.

Als Streckmittel, Verstärkungsmaterialien, Füllstoffe und Pigmente, die in den erfindungsgemässen härtbaren Zusammensetzungen eingesetzt werden können, eignen sich z.B. Kohlenteer, Bitumen, Glasfasern, Borfasern, Kohlenfasern, Cellulose, Polyethylenpulver, Polypropylenpulver, Glimmer, Asbest, Quarzpulver, Gips, Antimontrioxid, Bentonit, Lithopon, Baryt, Titandioxid, Russ oder Graphit.

Es können auch andere übliche Zusätze zugegeben werden wie z.B. Flammschutzmittel, Thixotropiermittel, Verlaufshilfsmittel wie beispielsweise Silikone, Celluloseacetat, Cellulosebutyrat, Polyvinylbutyrat, Wachse, Stearate und dergleichen, wobei diese teilweise auch als Trennmittel Verwendung finden.

Die erfindungsgemässen härtbaren Epoxidharzzusammensetzungen sind in erster Linie als Reparaturmörtel auf dem Gebiet des Oberflächenschutzes geeignet. Sie können jedoch ebenfalls in der Elektrotechnik, in Laminierverfahren sowie in der Bauindustrie Anwendung finden. Die Zusammensetzungen können in Formulierungen eingesetzt werden, die zur spezifischen Anwendung z.B. als Pressmassen, Giessharze, Werkzeugharze, Laminierharze, Dichtungs- und Füllstoffzusammensetzungen oder als Bodenbelagszusammensetzungen geeignet sind.

Die nachstehenden Beispiele erläutern die vorliegende Erfindung näher.

Darin sind alle Angaben, sofern nichts anderes vermerkt ist, Gewichtsangaben, wie z.B. Gew.-Teile, Gew.-% etc.

Beispiel 1:

Die folgenden Formulierungen werden durch inniges Vermischen der angegebenen Komponenten hergestellt.

| Harzsystem | 1 [Teile] | 2 [Teile] |
|---|---|---|
| Modifizierter Bisphenol A-Diglycidylether (Equivalentgew. = 180-190) | 8,62 | 8,62 |
| Kieselerdesand (0,044-0,42 mm) | 61,38 | 61,38 |
| Stahlpulver (0,18-0,42 mm)[1] | 30,00 | |
| Stahlpulver (0,06-0,149 mm)[2] | | 30,00 |
| Härter | | |
| Modifiziertes aliphatisches Amin[3] | 100,00 | 100,00 |

1) Ancor Steel M (Hoeganaes Corp.)
2) Ancor Steel 1000 (Hoeganaes Corp.)
3) Modifiziertes Reaktionsprodukt von Trimethylhexamethylendiamin, Bisphenol A und Bisphenol A-diglycidylether.

Beispiel 2:

Die Harz- und Härterkomponenten werden gleichmässig vermischt und anschliessend in eine Form (2,54 cm x 2,54 cm x 5,08 cm) gefüllt.

Eine Kupferwicklung wird auf die Oberfläche der Epoxidharzzusammensetzung gebracht und damit ein Induktionsstrom mit der in der folgenden Tabelle 1 angegebenen Leistung und Zeitdauer erzeugt.

Danach wird die Zeit bestimmt, die zu einer vollständigen Härtung führt, wobei diese dadurch definiert ist, dass das System eine Druckkraftfestigkeit von mehr als 207 bar erreicht.

Tabelle 1

| Harzsystem | Induktionsstrom | | Induktionszeit [min] | Härtungstiefe [cm] | Härtungszeit [Std.] |
|---|---|---|---|---|---|
| | Leistung [kW] | Frequenz [kHz] | | | |
| 1 | 15 | 400 | 5 | 5,08 | 0,33 |
| 1 | 40 | 400 | 2 | 5,08 | 1,0 |
| 1 | 45 | 320 | 5 | 5,08 | 1,5 |
| 1 | 80 | 320 | 5 | 5,08 | 0,5 |
| 1 | 25 | 10 | 10 | 5,08 | >3,0 |
| 1 | 40 | 10 | 10 | 5,08 | 1,0 |
| 1 | 18 | 320 | 10 | 2,54[1] | 1,0 |
| 1 | 45 | 320 | 10 | 2,54[1] | 0,75 |
| 2 | 15 | 400 | 10 | 5,08 | 1,0 |
| 2 | 45 | 320 | 15 | 5,08 | 3,0 |
| 2 | 80 | 320 | 10 | 5,08 | 2,5 |

1) Modifizierte Tiefe der Form

EP 0 359 709 A2

**Patentansprüche**

1. Zusammensetzung enthaltend
   a) 4-50 Gew.-% eines flüssigen Epoxidharzes mit durchschnittlich mehr als einer Epoxygruppe pro Molekül;
   b) 40-80 Gew.-% an Kieselerdepartikeln; und
   c) 10-50 Gew.-% einer Komponente, die auf Induktionsstrom anspricht und aus der Gruppe bestehend aus Eisenoxiden und Stahlpulver und deren Gemische ausgewählt ist.

2. Zusammensetzung gemäss Anspruch 1, worin das Epoxidharz ein Epoxidequivalentgewicht von 150-500 g/Equivalent aufweist, und ein Epoxy-Novolak, einen Polyglycidylether eines zweiwertigen Phenols, einen Polyglycidylether eines dreiwertigen Alkohols, ein cycloaliphatisches Epoxidharz, einen Polyglycidylester, einen epxoidierten Ester einer polyethylenisch ungesättigten Fettsäure, einen epoxidierten Ester eines ungesättigten Alkohols und einer ungesättigten Carbonsäure oder einen epoxidierten polyethylenisch ungesättigten Kohlenwasserstoff darstellt.

3. Zusammensetzung gemäss Anspruch 1, worin das Epoxidharz durch einen reaktiven Verdünner modifiziert ist.

4. Zusammensetzung gemäss Anspruch 2, worin das Epoxidharz ein Diglycidylether eines zweiwertigen Phenols ist.

5. Zusammensetzung gemäss Anspruch 1, worin die Partikelgrösse von mindestens 90 % der Kieselerde (b) 0,03-0,42 mm beträgt.

6. Zusammensetzung gemäss Anspruch 1, worin die Komponente (c) $\gamma$-$Fe_2O_3$, magnetisches $Fe_3O_4$, Stahlpulver und deren Gemische darstellt.

7. Zusammensetzung gemäss Anspruch 6, worin Komponente (C) Stahlpulver mit einer Partikelgrösse für mindestens 90 % der Partikel von 0,03-0,42 mm bedeutet.

8. Zusammensetzung gemäss Anspruch 1, welche zusätzlich einen Härter für die Zusammensetzung in einem stöchiometrischen Verhältnis von 0,5-1,5 bezogen auf die Komponente (a) enthält.

9. Zusammensetzung gemäss Anspruch 8, worin der Härter ein latenter Härter ist.

10. Gehärtetes Produkt erhältlich durch Härten der Zusammensetzung nach Anspruch 8 unter Anwendung einer Induktionswärmeenergiequelle.

11. Gehärtetes Produkt erhältlich durch Härten der Zusammensetzung nach Anspruch 9 unter Anwendung einer Induktionswärmeenergiequelle.

12. Verwendung der Zusammensetzung nach Anspruch 1 als Reparaturmörtel für schadhafte Oberflächen.

13. Verwendung der Zusammensetzung nach Anspruch 9 als Reparaturmörtel für schadhafte Oberflächen.